# EUROPEAN PATENT APPLICATION

(11) **EP 2 767 200 A1**
(43) Date of publication of application: **20.08.2014**
(21) Application number: 14275020.7
(22) Date of filing: 06.02.2014
(51) Int. Cl.: A47J 37/04, A47J 43/18

(54) **Dual purpose roasting rack**

(30) Priority: 14.02.2013 US 201361764828 P
(71) Applicant: Browne & Co., Markham, Ontario L3R 1E3 (CA)
(72) Inventor: Ho, Neal, San Francisco, California 94105 (US)
(74) Representative: Burt, Matthew Thomas

(57) **Abstract**

A dual purpose roasting rack (101) having opposed arms (103) mounted to a roasting rack which are movable between two configurations. In the first configuration, the arms (103) are substantially parallel to the base (102) and food may be mounted on the roasting rack apparatus in a horizontal orientation. In the second configuration, the opposed arms (103) sit substantially upright relative to the base (102) and cooperate to enable food, such as poultry, to be cooked in a vertical orientation. The opposed arms (103) may rotate between the two configurations and may interlock together while in the second configuration.

## Description

### FIELD

The present disclosure relates in general to roasting racks for cooking food, such as food, and more particularly to a dual purpose roasting rack allowing for roasting of food in a horizontal or vertical mounted position.

### BACKGROUND

Roasting racks are known technology in the culinary fields and generally operate to elevate food for cooking, including meat, above a roasting pan to assist in even cooking, allow the collection of fat for other culinary purposes and to facilitate eventual cleaning of the roasting pan. Traditional roasting racks are of a design such that they lay substantially flat or co-planner relative to the surface, for example a roasting pan, on which they sit allowing for food to be placed on the rack while it is cooked.

Vertical roasting racks and related implements are also known which sit substantially upright or perpendicular relative to the surface on which they sit and allow for the vertical mounting of food above a roasting pan or other device. Such vertical roasting racks have similar properties or features to a standard horizontal oriented roasting rack but provide further uses including supporting food to be cooked in an upright orientation. Upright positioning may provide preferable cooking conditions, particularly for poultry, and allow for more efficient use of cooking space.

However, both traditional horizontal and vertically mounted roasting implements suffer from space inefficiencies as they may be bulky and require dedicated storage space in a kitchen. Should a person wish to have the option of mounting food in either a vertical or horizontal orientation, they would traditionally be required to acquire two separate apparatuses to do so.

### SUMMARY

Accordingly, it is desirable to provide a roasting rack apparatus that changeably provides a horizontal or vertical roasting rack in order to reduce the number of implements used in a kitchen and the requirement to purchase multiple implements.

The present disclosure is directed to a dual purpose roasting rack having moveable arms providing a roasting rack with changeable configurations.

In one embodiment, at least one set of opposed arms mounted on a base are moveable between a first and a second configuration. In the first configuration, the opposed arms are largely parallel to the surface that the base sits on. In the second configuration, the opposed arms cooperate to allow for food to be mounted thereon.

In a further embodiment, the opposed arms may be rotationally connected to the base allowing for rotation of the arms between the first and second configurations.

In a further embodiment, the opposed arms, each having a longitudinally opposed base connecting end at least one free end, may have more than one free ends providing more than one vertical roasting rack site.

In a further embodiment, the opposed arms may cooperatively interlock with one another while in the second configuration.

### BRIEF DESCRIPTION OF THE DRAWINGS

The examples will be described in further detail below with reference to the accompanying figures in which:
Figure 1 is a perspective view of one embodiment of the roasting rack apparatus where the opposed arms are in the first configuration.
Figure 2 is a perspective view of the embodiment of Figure 1 where the opposed arms are in the second configuration.
Figure 3 is an illustration of one embodiment with food placed in the first configuration.
Figure 4 is an illustration of one embodiment with food mounted in a the second configuration.
Figure 5 is a top view of an alternative embodiment of the invention.
Figure 5A is a side view of the embodiment in Figure 5 as seen from chord A-A.
Figure 6 is an enlarged perspective view of a set of opposed arms as seen in the embodiment in Figures 1 and 2.

### DETAILED DESCRIPTION

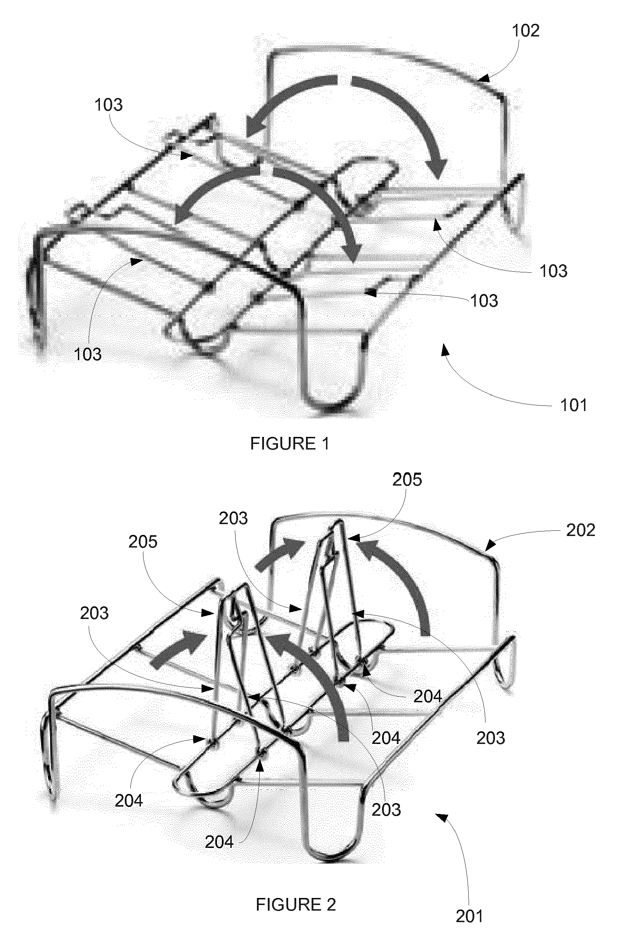

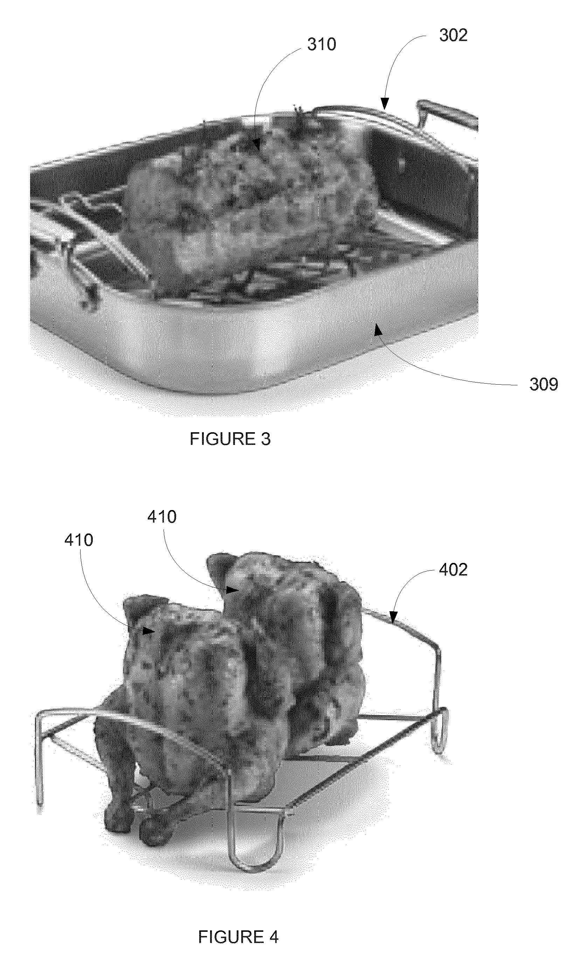

Figures 1 and 2 illustrate a roasting rack apparatus 101 made up of a base 102 and at least one set of opposed arms 103. Figure 3 is an illustration of one embodiment with food placed in a first configuration. Figure 4 is an illustration of one embodiment with food mounted in a second configuration. As illustrated by Figures 1 and 2, each set of opposed arms are moveable between a first configuration as seen in Figure 1, and a second configuration as seen in Figure 2.

The base 102 may have a variety of possible structural formations, though for simplicity of cleaning and storage it may be a roasting rack and may be made of a wire frame. The base must be sufficiently rigid to support the weight of food set upon it and to keep such food 310 elevated above a roasting pan 309 or other surface. Roasting racks which may form the base are generally known, and various structural configurations can provide the required rigidity. The roasting rack shown in Figures 1 and 2 provides an example structural configuration comprising a wire type roasting rack.

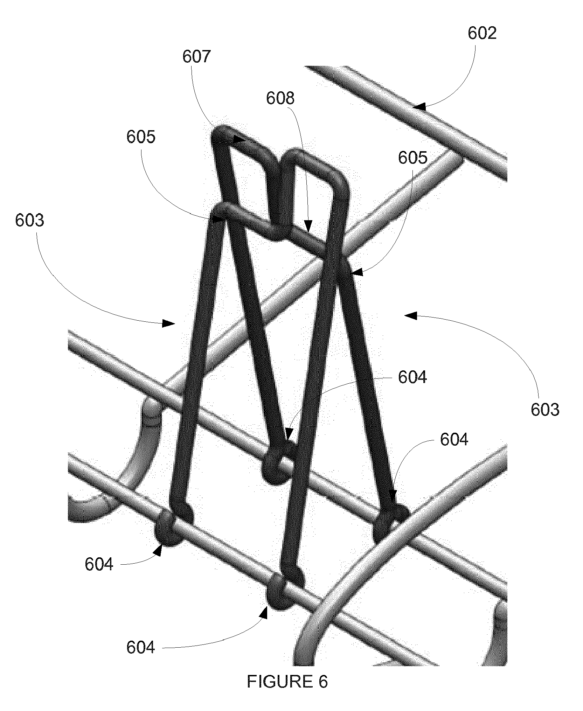

As illustrated in Figure 6, each arm of the at least one set of opposed arms 603 comprises at least one first, free end 605, and at least one longitudinally opposite base mounting end 604. These opposed arms may comprise a wire frame or be solid pieces of material, provided that in either case they are dimensionally sufficient to not hinder the placement of food in the first configuration and to cooperate with food when in the second configuration.

The opposed arms may be formed from a variety of suitable rigid and durable materials including aluminum, enamel coated metals and stainless steel which are resistant to high temperatures commonly found in ovens and other cooking sites.

In an enlarged view of one embodiment, as seen in Figure 6, the opposed arms 603 comprise wire frames where a single wire is formed such that it has two or more base mounting ends 604 and its middle portion forms the free end 605.

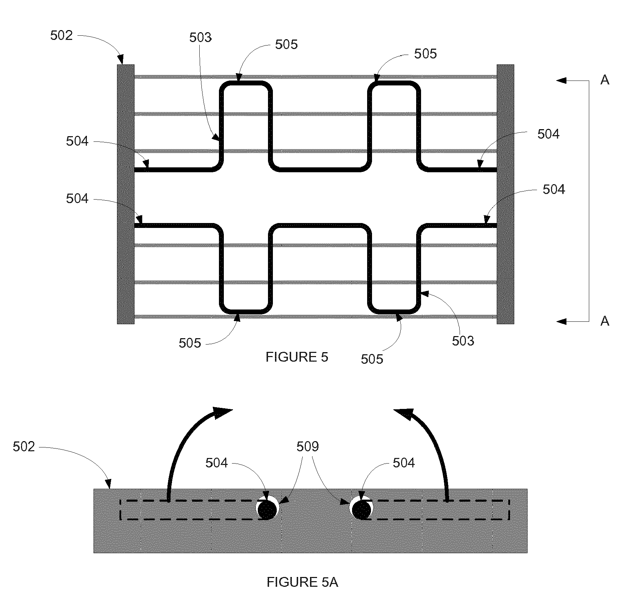

In a further embodiment, as illustrated in Figure 5, the opposed arms 503 may have sufficient free ends 505 to mount more than one piece of food per opposed set of arms. One aspect of such an embodiment would be to form a single wire such that its ends are base ends 504, while its middle portion is formed into multiple free ends as shown in Figure 5.

As illustrated in Figures 1 and 2, the opposed arms are movable between the first configuration and the second configuration. While in the first configuration, the sets of opposed arms 103 may rest on the base 102 and sit generally flat. In this position, the opposed arms do not interfere with and may support the placement of food 310 on the roasting rack apparatus 301 as shown in Figure 3.

While in the second configuration, the opposed arms cooperate to interact with food 410 in a generally vertical position. A common form of food to be mounted in such a way is poultry which, upon preparation, generally presents a cavity (not shown) allowing an interface for vertical mounting. Such interfacing prevents the food from falling over when placed in a generally upright position. Figure 4 illustrates food 410 in a vertically mounted position on sets of opposed arms 103 (hidden in Figure 4).

In an alternative embodiment, while in the second configuration, the opposed arms 103 may cooperate to hold food in a generally vertical orientation by cooperating with the exterior surface of the food.

While Figures 1 and 2 illustrate sets of opposed arms which are independently rotationally mounted, it will be appreciated that other forms of mounting would be effective. For example, this could be accomplished by the interaction of the tips of the opposed arms 103 (if the arms are wire formed) or of extruded pegs (where the arms are of solid material) with fixed holes or eyelets (not shown) on the base allowing for changing of the opposed arms' configuration between the first and second configurations.

Rotational mounting of the opposed arms 103 may be accomplished through a variety of means, but may be done by the mounting or integrally forming loops at the base mounting ends 604 of the opposed arms 603 to receive and cooperate with the structure of the base 602 to allow for rotation of the opposed arms about the roasting rack, as shown in Figures 1, 2 and 6. Other forms of rotational mounting may also be apparent, such as forming the base mounting end 504 to have protrusions or extension which interface with eyelets 509 drilled, formed from or mounted on the base 502. This form of mounting is shown in Figure 5. It will be appreciated that other forms of rotational mounting are known and may suitably be employed to allow for rotation of the arms between the first and second configurations.

While the opposed arms 103 may be mounted on the base 102 to cooperate to hold food in a generally vertical position without touching one another, the arms may rest on one another while in the second configuration to increase the strength and rigidity of the arm structure while in this configuration. Accordingly, in a further embodiment, the one or more sets of opposed arms 103 may meet and interlock when both are in the second configuration. Specifically, the free ends 605 of the opposed arms may be formed such that the arms rest upon one another while in the upright position.

Interlocking may be effected by cutting at least one notch 608 into the top of a solid material arm, or forming a wire arm to have such a notch resulting one or more notches 608 and one or more protuberances 607. Said notches 608 and protuberances 607 may be cut or formed in opposite fashion such that a notch from a first arm marries with a protuberance from an opposed second arm. This cooperative interaction is most clearly shown in Figure 6.

In a further embodiment, the structural formation of the roasting rack apparatus may be formed such that the at least one set of opposed arms occupy only a portion of the roasting rack area when in the second configuration. Such a structure allows for a portion of the apparatus to be effectively in the second configuration and able to support vertical food, while a portion remains in the first configuration allowing for the generally flat laying of food.

While this invention has been described with reference to illustrative embodiments and examples, the description is not intended to be construed in a limiting sense. Thus, various modification of the illustrative embodiments, as well as other embodiments of the invention, will be apparent to persons skilled in the art upon reference to this description. It is therefore contemplated that the appended claims will cover any such modifications or embodiments.

## Claims

1. A roasting rack apparatus comprising:
a base; and
at least one set of opposed arms movable between a first configuration and a second configuration where, in the first configuration, the at least one set of opposed arms is substantially parallel to the base and where, in the second configuration, the at least one set of opposed arms are substantially upright relative to the base.

2. The roasting rack apparatus of claim 1, wherein the base is a roasting rack.

3. The roasting rack apparatus of claim 2, wherein the roasting rack comprises a wire frame.

4. The roasting rack apparatus of any one of claims 1 to 3, wherein the at least one set of opposed arms comprise a wire frame.

5. The roasting rack apparatus of any one of claims 1 to 4, wherein the at least one set of opposed arms are rotationally mounted to the base.

6. The roasting rack apparatus of claim 5 wherein each of the at least one set opposed arms are independently rotatable.

7. The roasting rack apparatus of any one of claims 1 to 6 wherein each of the at least one set of opposed arms have at least one base mounted end and at least one free end.

8. The roasting rack apparatus of any one of claims 1 to 7 wherein the at least one set of opposed arms cooperate by interlocking.

9. The roasting rack apparatus of any one of claims 1 to 8 where, in the second configuration, the at least one set of opposed arms cooperate to receive at least one piece of poultry having a cavity with which the at least one set of opposed arms interact.

10. A method of using a roasting rack apparatus comprising a base; and at least one set of opposed arms movable between a first configuration and a second configuration where, in the first configuration, the at least one set of opposed arms is substantially parallel to the base and where, in the second configuration, the at least one set of opposed arms are substantially upright relative to the base comprising the steps of:
electing to cook food in either a first configuration or a second configuration;
accordingly moving the roasting rack apparatus to either the first configuration or the second configuration;
mounting food on the roasting rack apparatus; and
cooking the food.
